# EUROPEAN PATENT APPLICATION

(11) **EP 4 750 097 A1**
(43) Date of publication of application: **27.05.2026**
(21) Application number: 25218427.0
(22) Date of filing: 25.11.2025
(51) Int. Cl.: H04W 4/02, H04W 4/42, H04W 4/70, H04W 4/80, H04W 40/12, H04W 40/24, H04W 40/34, H04W 76/18, H04W 76/19, H04W 76/50, H04W 84/18, H04W 40/22

(54) **WIRELESS INFRASTRUCTURE USING BLUETOOTH**

(30) Priority: 25.11.2024 US 202418958267
(71) Applicant: The Boeing Company, Arlington, VA 22202 (US)
(72) Inventor: CHIA, Tian Ji, ARLINGTON, 22202 (US); TING, Goh See, ARLINGTON, 22202 (US); ASHOK, Rahul, ARLINGTON, 22202 (US); HADLEY, Kyle Mclaren, ARLINGTON, 22202 (US); ANSTEY, Timothy William, ARLINGTON, 22202 (US); SCHWARTZ, Samantha, ARLINGTON, 22202 (US); CHONG CHEE SIONG, Ryan, ARLINGTON, 22202 (US)
(74) Representative: Plasseraud IP

(57) **Abstract**

A method of transmitting data from a first Bluetooth Low Energy, 'BLE', device that has a failed Internet connection. Upon determining that Internet connectivity has failed at the first BLE device, the method includes transmitting, from the first BLE device to a second BLE device detected by the first BLE device, data via a BLE signal with the second BLE device being within a threshold distance from the first BLE device. The method further includes determining that an Internet connection is available to the second BLE device and transmitting the data to a gateway from the second BLE device.

## Description

### TECHNOLOGICAL FIELD

The present disclosure relates generally to wireless communication technology and, more specifically, to short-range communication among short-range compatible devices upon the loss of Internet communications.

### BACKGROUND

The Internet is highly depended upon for performing business-related or personal tasks. For example, many businesses and organizations perform business operations that require the Internet for the transmission of data from multiple devices. An example of a business operation that relies on an Internet connection includes an airline cargo operation. During the ordinary course of business, multiple devices located in the airport associated with airline cargo operations require an Internet connection to locate, identify, and keep track of cargo at any given time.

However, an Internet connection, particularly a wireless Internet connection (i.e., Wi-Fi) that is used on a vehicle, is not always reliable and can fail due to various events such as vehicle movement, multiple roaming access points, intermittent Internet access, or blind spots. If the Internet fails, valuable information may be lost, or the receipt may be delayed. These failures can disrupt the data flow between connected devices, making it challenging to maintain connectivity for data transfer.

Fortunately, there are alternative ways to transmit data. One such alternative to a wireless internet connection is Bluetooth Low-Energy (BLE). BLE offers wireless data transfer, including uploading and downloading data similar to WiFi. Bluetooth and Wi-Fi are both wireless technologies that use radio signals to communicate, but they have different purposes and capabilities. BLE is a low-energy option (as compared to Wi-Fi) used for short-range device-to-device connections, while Wi-Fi connects devices to a network for Internet access. In certain environments where devices are within proximity to one another, BLE can be a reliable solution for transmitting data, especially when an Internet connection fails.

### SUMMARY

The present disclosure provides a method of transmitting data from a first Bluetooth Low Energy (BLE) device as defined by independent claim 1 and a method of transmitting data from a first BLE device that has an Internet failure as defined by independent claim 8. The present disclosure further provides a method of transmitting data from a second BLE device as defined by independent claim 13. Preferred embodiments are defined in the appended dependent claims. The method of transmitting data from a first BLE device includes determining that a first BLE device has an Internet connection failure. The method further includes determining that a second BLE device is within proximity to the first BLE device. The method further includes transmitting, from the first BLE device to the second BLE device, the data via BLE.

In some aspects, the method further includes determining that the second BLE device is able to connect to the Internet prior to transmitting the data from the first BLE device to the second BLE device.

In some aspects, the method further includes determining after receiving the data on the second BLE device that the second BLE device has an Internet connection failure.

In some aspects, the method further includes responsive to determining that the Internet connection is unavailable to the second BLE device, sending the data from the second BLE device to a third BLE device via a BLE signal with the third BLE device being within a threshold distance from the second BLE device and transmitting the data from the third BLE device to the gateway.

In some aspects, the method further includes responsive to determining that the second BLE device has an Internet connection failure and determining that a cellular network is available to the second BLE device.

In some aspects, the method further includes transmitting, by the first BLE device, a request message to the second BLE device to request BLE communication with the second BLE device and receiving an acknowledgment from the second BLE device indicating that the second BLE device is capable of receiving a BLE signal from the first BLE device.

In some aspects, the method further includes transmitting the data from the second BLE device to a gateway upon determining that there is no Internet failure.

In some aspects, the first BLE device is in a vehicle.

In some aspects, the second BLE device is a peripheral device located at an airport.

In some aspects, the first BLE device and the second BLE device are not provided service within a same cellular network.

The method of transmitting data from a first BLE device that has an Internet failure includes detecting a second BLE device capable of BLE connectivity. The method further includes transmitting data from the first BLE device via BLE to the second BLE device. The method further includes determining that an Internet connection is available to the second BLE device. In addition, the method includes responsive to determining that the Internet connection is available to the second BLE device, transmitting the data to a gateway.

In another aspect, the first BLE device and the second BLE device are Internet of Things (IOT) devices.

In another aspect, the second BLE device are part of a node-to-node network connected via BLE signals.

In another aspect, the method further comprises transmitting, by the first BLE device, a request message to the second BLE device to request BLE communication with the second BLE device and receiving an acknowledgment from the second BLE device indicating that the second BLE device is capable of receiving a BLE signal from the first BLE device and responsive to receiving the acknowledgment, transmitting the data from the first BLE device to the second BLE device.

In another aspect, the first BLE device is located in a vehicle.

In another aspect, the second BLE device is a peripheral device located at an airport.

In another aspect, the first BLE device and the second BLE device are not provided service within a same cellular network.

The method of transmitting data from a second BLE device includes receiving a request message at a second BLE device from a first BLE device requesting BLE communication. The method further includes transmitting an acknowledgment from the second BLE device to the first BLE device indicating that the second BLE device is capable of receiving a BLE signal from the first BLE device. The method further includes responsive to a distance between the second BLE device and the first BLE device being below a predetermined threshold, receiving data via BLE from the first BLE device. The method further includes determining that an Internet connection is available for the second BLE device. In addition the method includes responsive to determining that the Internet connection is available, transmitting the data to a gateway from the second BLE device.

In another aspect, the method further includes determining that the Internet connection is available at the second BLE device prior to receiving the data via BLE from the first BLE device.

In another aspect, the method further includes responsive to a cellular network not being available to the second BLE device, detecting a distance between a third BLE device and the second BLE device and determining that the distance is below a threshold and transmitting the data from the second BLE device to the third BLE device and transmitting the data to the gateway from the third BLE device.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

FIG. 1 is an isometric view of an aircraft with BLE compatible devices onboard the aircraft.
FIG. 2 is an isometric view of cargo being loaded onto an aircraft.
FIG. 3 is schematic diagram illustrating a wireless infrastructure including BLE compatible devices.
FIG. 4 is a flowchart diagram illustrating a method for enabling BLE in the wireless infrastructure.
FIG. 5 is a flowchart diagram illustrating a method for enabling BLE in the wireless infrastructure.
FIG. 6 is a flowchart diagram illustrating a method for enabling BLE in the wireless infrastructure.
FIG. 7 is a flowchart diagram illustrating a method for enabling BLE in the wireless infrastructure.
FIG 8. is a flowchart diagram illustrating a method for enabling BLE in the wireless infrastructure.
FIG. 9 is a schematic block diagram illustrating an exemplary BLE compatible device.
FIG. 10 is a schematic block diagram illustrating an exemplary gateway.

### DETAILED DESCRIPTION

The present disclosure is generally directed to a wireless infrastructure utilizing neighboring BLE devices to enable connectivity of wireless communication operations. When there is a failure in the Internet connection to a first BLE device, the first device alternatively locates another device with an Internet connection and secures a Bluetooth Low Energy (BLE) connection with the other device. The BLE connection with the other device prevents a user from completely losing Internet access. This connection between the devices enables data to be uploaded or downloaded via Internet access (e.g., Wi-Fi, WLAN, LAN, cable, etc.).

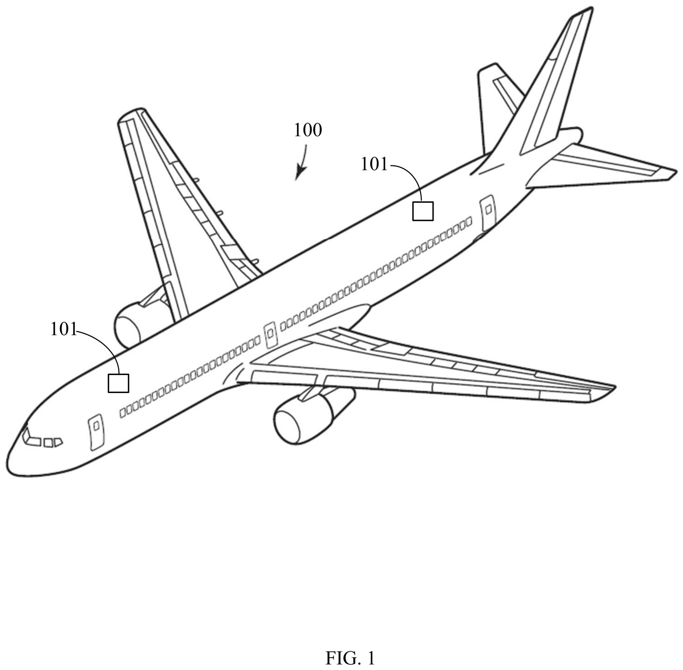

The BLE-enabled redundant system has applications in a variety of different contexts. One application is when a BLE device is located on a vehicle. FIG. 1 illustrates one specific example in which the vehicle is an aircraft 100 configured to transport persons and/or cargo.

In some examples, one or more vehicle BLE enabled devices 101 (vehicle BLE devices) are located on the vehicle. The various vehicle BLE devices 101 can have various configurations. In some examples, a vehicle BLE device 101 is specific to a person such as a passenger or flight crew that is on-board the vehicle. Examples of these types of vehicle BLE devices 101 include but are not limited to laptop computers, tablets, smartphones, and smartwatches. In some examples, the vehicle BLE device 101 is integrated with the vehicle 100. An example of this type of vehicle, BLE device 101, is an Internet of Things (IoT) device configured to enable communications to and from vehicle 100.

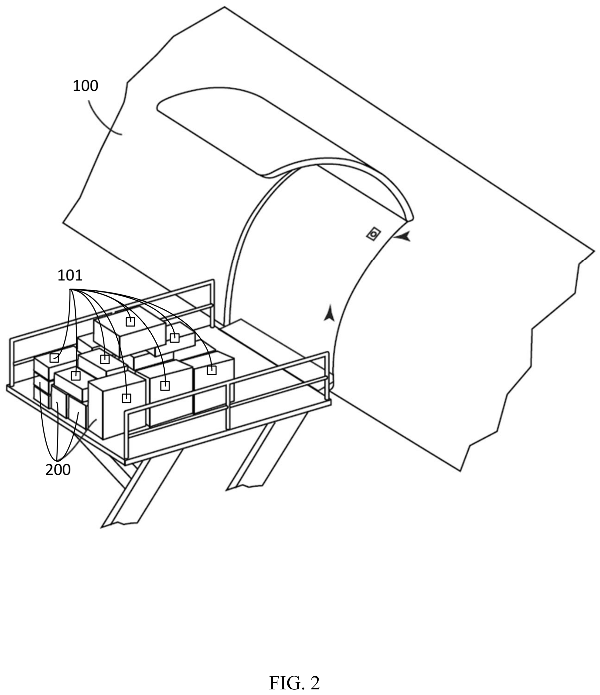

In some examples, the BLE device 101 is attached to cargo 200 that is transported by the aircraft 100. The BLE device 101 is configured to track the cargo 200 during transport. FIG. 2 illustrates an example of cargo 200 equipped with BLE devices 101. In this example, the cargo 200 is individual relatively small containers that are positioned on a pallet. The individual packages are equipped with BLE devices 101. In other examples, the cargo 200 is a larger unit load device (ULD) used to load items such as luggage, freight, and mail on wide-body and specific narrow-body aircraft. In some examples, a single BLE device 101 is mounted to the ULD.

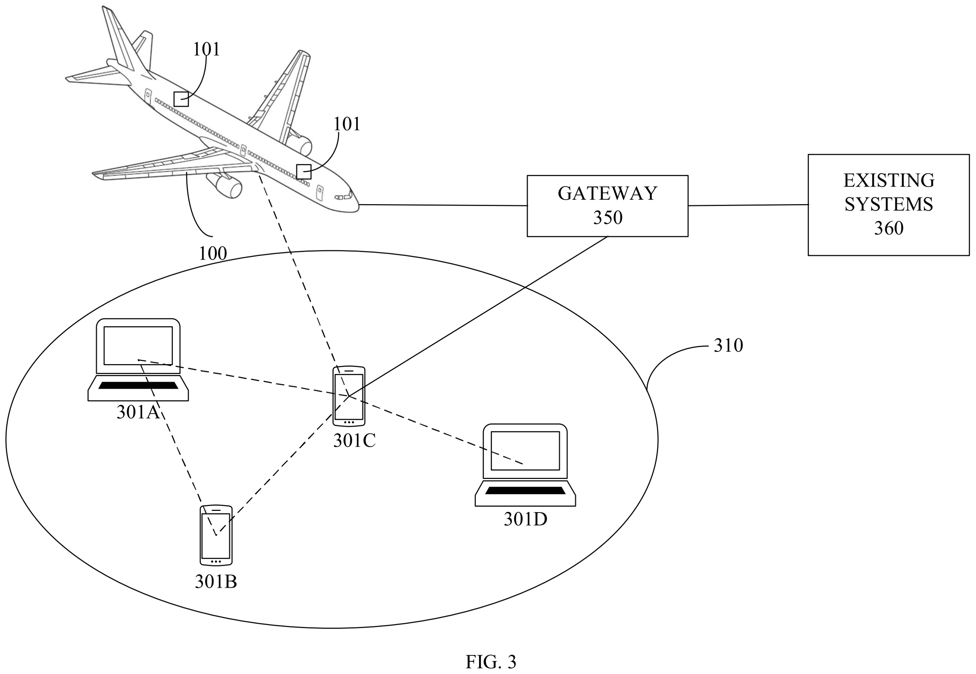

While on the aircraft 100, the vehicle BLE device 101 connects to the Internet through a gateway. FIG. 3 illustrates an example of one or more BLE devices 101 that are communicatively connected through a gateway 350 to one or more existing systems 360 that enable Internet access. The gateway 350 may be, for example, a central cloud or server.

An issue that occurs with BLE devices 101 on board a vehicle 100 fail to have access to the Internet through the gateway 350. The failure can occur for include various events, including but not limited to the BLE device 101 unable to connect to the gateway 350. Communication failure can happen in various circumstances, including but not limited to when the vehicle 100 moves into a dead spot, the Internet service provider is down, hardware issues affecting the router or cables, outdated software, and congestion. Another failure is when the signal strength at the vehicle BLE device 101 is below a predetermined threshold. The signal strength determines the latency, quality, and reliability of the data transfer. For example, a weak signal may send a delayed signal, missing data, or no data transfer. Therefore, a predetermined threshold signal strength may be used as a cutoff for transferring signals. In some examples, signal strengths can range from approximately -30 dBm to -110 dBm. The closer that number is to 0, the stronger the cell signal. A Wi-Fi signal strength of -30 dBm is considered a perfect signal. A Wi-Fi signal strength of -90 dBm is considered disconnected. A good signal is between -50 dBm and -67 dBm. A signal at -50 dBm is considered excellent. In some examples, -67dBm is the minimum reading for a reliable signal. Anything lower than -67 dBm causes concern. In some examples, the threshold is set to -70 dBm.

When an Internet signal has failed and the vehicle BLE device 101 wants to transmit data to the gateway 350, the vehicle BLE device 101 seeks assistance from a neighboring ground BLE device 301. Once the vehicle BLE device 101 detects a ground BLE device 301, the data is transmitted from the vehicle BLE device 101 to the ground BLE device 301. The ground BLE device 301 then transmits the data to the gateway 350 through a connection such as the Internet or WLAN that is available to the ground BLE device 301. If the ground BLE device 301 has no connectivity, the ground BLE device 301 transmits the data to another ground BLE device 301 via a BLE connection. This process continues until a ground BLE device 301 is able to transmit the data to the gateway 350.

As illustrated in FIG.3, at least one ground BLE device 301 is positioned outside of and in proximity to the vehicle 100 to enable BLE communication. The other ground BLE devices 301 are positioned in proximity to the first ground BLE device 301 to enable communication to transfer the data if the first ground BLE device 301 lacks connectivity to the gateway 350. The ground BLE devices 301 are interconnected via BLE such that they create a mesh or network of nodes forming a node-to-node network 310.

The communications between the various BLE devices 101 and 301 require that the devices be within proximity to one another. BLE is often used for short-range applications, and signals may range from 0-25 meters to over 1 kilometer, depending on several factors, including environment, the power and sensitivity of the BLE device, and the type of BLE technology used. In some examples, to facilitate communication the BLE devices search to couple with other devices that are within a predetermined threshold range. For example, for ground operations at an airport the threshold may be set to be less than 130m away.

The number and type of ground BLE devices 301 can vary. In some examples, the ground BLE devices 301 include peripheral devices located on the ground of the airport. Examples of peripheral devices include but are not limited to a laptop computer, tablet, smartphone, and smartwatch. In some examples, these are used by persons working in proximity to the vehicle 100. In the example of the aircraft, these can include but are not limited to baggage handlers, gate agents, and food-service personnel. In some examples, the ground BLE devices 301 are positioned in other vehicles in proximity to the vehicle 100. Again, using the aircraft context, examples include but are not limited to other aircraft, fueling vehicles, and luggage-moving vehicles. Another example includes devices within buildings that are in proximity to the vehicle 100, such as within the terminal of an airport. In the various examples, the ground BLE devices 301 can be statically positioned relative to the vehicle 100 or can be mobile and move relative to the vehicle 100.

The ground BLE devices 301 transmit the data to the gateway 350 in various ways. One method is to transmit data wirelessly, such as via Wi-Fi through an Internet connection or a cellular connection. Other examples include a hardwire connection.

Existing systems 360 refer to airlines' back office software that may include various applications and databases that can be configured with application programming interface(s) (APIs). The existing systems 360, for example, may include cloud modules designed to manage and process data streams from the BLE network 310. Data streamed in from the BLE devices 101 and 301 could be stored in databases.

APIs facilitate seamless integration and communication between the databases and various consumer applications, enabling real-time aggregation, analysis, and distribution of data. There may also be publish/subscribe mechanisms where the BLE devices 101 and 301 publish data to specific topics, and subscribers, which could be applications, services, or other cloud components, receive updates based on the subscriptions.

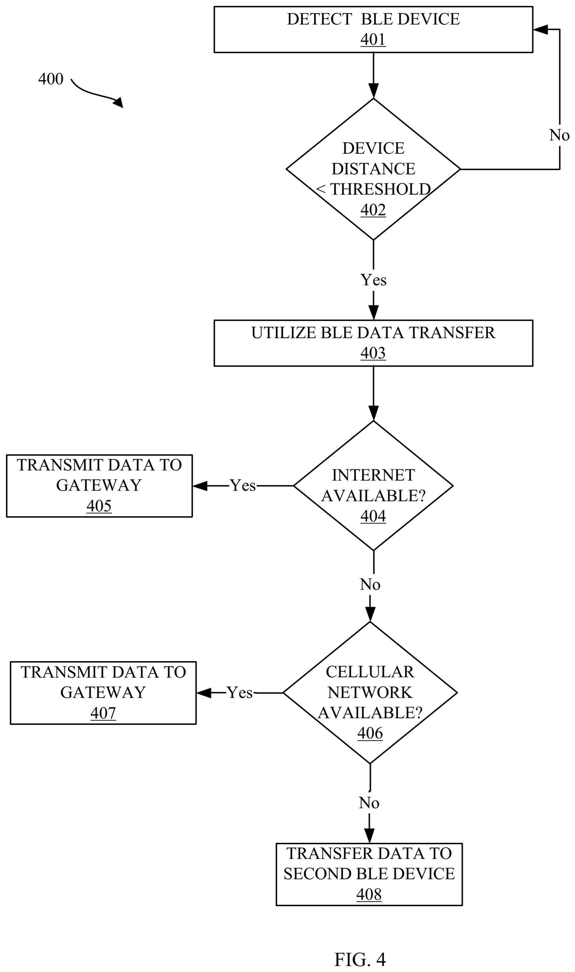

FIG. 4 illustrates a method (400) of transmitting data. In some examples, the method is triggered when the vehicle BLE device 101 wants to transmit data but has failed to connect to the Internet. The vehicle BLE device 101 looks to transmit data to the gateway 350 in another manner. The vehicle BLE device 101 detects a neighboring ground BLE device 301 within proximity that may be used to pass the data along to the gateway 350 (block 401).

Once at least one neighboring ground BLE device 301 is found, the vehicle BLE device 101 determines whether the distance to the ground BLE device 301 is within a threshold (block 402). When the distance is less than the predetermined threshold, the ground BLE device 301 is determined to be within range, and the vehicle BLE device 101 utilizes BLE to transfer data to the ground BLE device 301 (block 403).

After receiving the data, the ground BLE device 301 determines if it is able to connect to the gateway 350. The ground BLE device 301 determines if the Internet is available to transfer the data (block 404). If the Internet is available, the data is transmitted to the gateway 350 via the Internet connection (block 405). In some examples, the internet connection is a WiFi connection. If an Internet connection is not available, the ground BLE device 301 determines if a cellular network (e.g., 5G, 4G network) is available (block 406). If a cellular network is available, the data is transferred to the gateway (block 407). If a cellular network is not available, the ground BLE device 301 looks for a second ground BLE device 301 within the node-to-node network 310 to transfer the data. Once the second ground BLE device 301 (e.g., second device) is found, the data is transferred to the second ground BLE device 301 (block 408). The second ground BLE device 301 then performs a similar process of transmitting the data to the gateway 350.

In some examples, prior to the vehicle BLE device 101 transmitting the data to the ground BLE device 301, the ground BLE device 301 determines whether it is able to transmit the data via the Internet. If there is no Internet connection at the ground BLE device 301, the ground BLE device 301 notifies the vehicle BLE device 101 and the data is not transmitted to this ground BLE device 301. Instead, the vehicle BLE device 101 detects an alternative ground BLE device 301 with an Internet connection to which it transmits the data.

In some examples, the vehicle BLE device 101 determines if the ground BLE device 301 has an Internet connection. The vehicle BLE device 101 queries the ground BLE device 301 to determine its Internet connection status (e.g., connected or not connected). In some examples, the vehicle BLE device 101 transmits the data only after the ground BLE device 301 has confirmed internet connectivity.

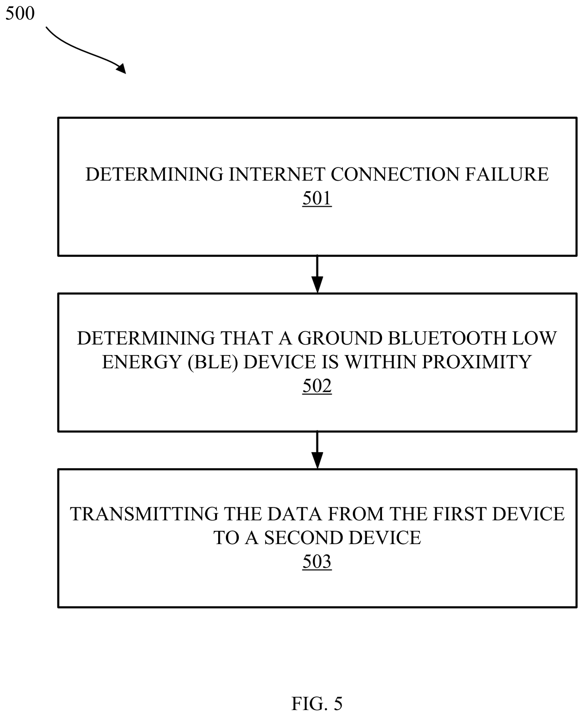

FIG.5 illustrates a method 500 of transmitting data from a vehicle BLE device 101. The vehicle BLE device 101 determines an Internet connection failure (block 501). The Internet connection failure may occur for several different reasons, for example, if there is a low-quality Wi-Fi signal, the Internet service provider is down, hardware issues affecting the router or cables, outdated software, and congestion, etc.

After experiencing the failure, the vehicle BLE device 101 determines that a ground BLE device 301 is within proximity (block 502). The ground BLE device 301 is in proximity when it is within a threshold distance that enables the vehicle BLE device 101 to transmit data via BLE to the ground BLE device 301. In some examples, this distance is determined by the vehicle BLE device 101 using GPS coordinates or other locating features to determine the two locations. In some examples, the threshold is based on a predetermined BLE signal quality between the devices 101 and 301. For example, if the BLE signal quality is above a predetermined strength or a certain signal quality.

In some examples, the vehicle BLE device 101 detects more than one ground BLE device 301. The vehicle BLE device 101 determines the best option, such as using the ground BLE device 301 with the lowest threshold distance or the highest BLE signal quality among the detected devices.

In some examples, prior to transmitting the data via the BLE signal, the vehicle BLE device 101 transmits a request message to the ground BLE device 301 to request BLE communication with the second BLE device 301. The vehicle BLE device 101 transmits the data upon receipt of an acknowledgment from the ground BLE device 301 indicating that the device 301 is capable of receiving a BLE signal from the ground BLE device 101.

After determining the ground BLE device 301, the vehicle BLE device 101 transmits the data via a BLE signal to the ground BLE device 301 (block 503).

After receiving the data, the ground BLE device 301 transmits the data to the gateway 350 upon determining that there is no internet failure. The mode of connection can vary. For example, it may be a Wi-Fi or cable Internet connection.

In the example of FIG.5, the ground BLE device 301 is able to transmit the data to the gateway 350. In other examples, one or more additional transfers to other ground BLE devices 301 are necessary to ultimately transmit the data to the gateway 350. The transfers occur until the data is received by a ground BLE device 301 that has an Internet connection capable of transferring the data to the gateway 350.

In some examples, two or more of the ground BLE devices 301 within the node-to-node network 310 are not provided service within the same cellular network. In this case, multiple cellular networks may be checked to determine potential Internet connectivity with the multiple devices in the node-to-node network 310.

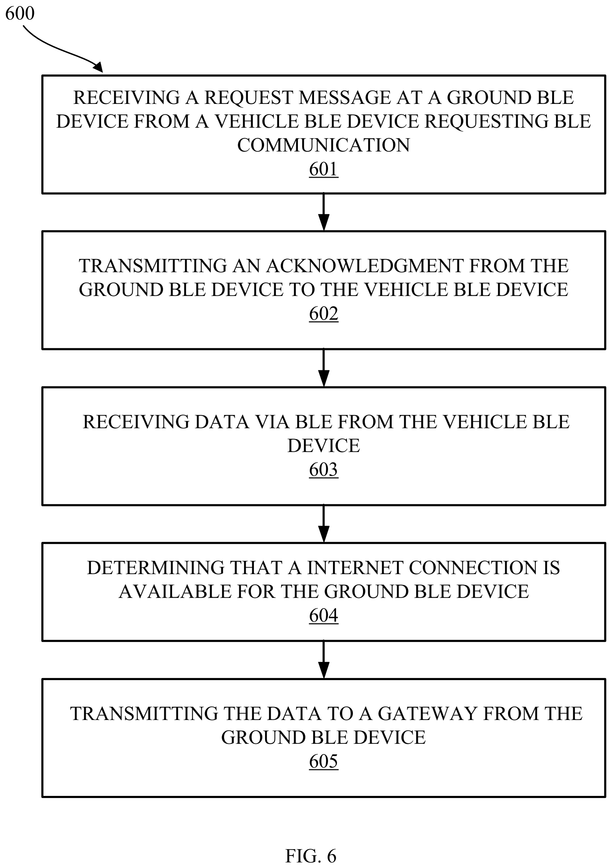

FIG. 6 illustrates the methodology (600) of a ground BLE device 301. The ground BLE device 301 receives a request message from a vehicle BLE device 101 requesting BLE communication (block 601). The ground BLE device 301 transmits an acknowledgment to the vehicle BLE device 101 indicating it is capable of receiving a BLE signal (block 602). Responsive to a distance between the devices 301, 101 being below a predetermined threshold, the ground BLE device 301 receives data via BLE from the vehicle BLE device 101 (block 603).

The ground BLE device 301 determines that an Internet connection is available (block 604). The Internet connection is available for the ground BLE device 301 on a network that is the same or different than the network associated with the vehicle BLE device 101. Responsive to determining that the Internet connection is available, the ground BLE device 301 transmits the data to a gateway 350 (block 605). In some examples, the gateway 350 is connected to the node-to-node network 310 via one or more networks associated with one or more nodes within the node-to-node network 310.

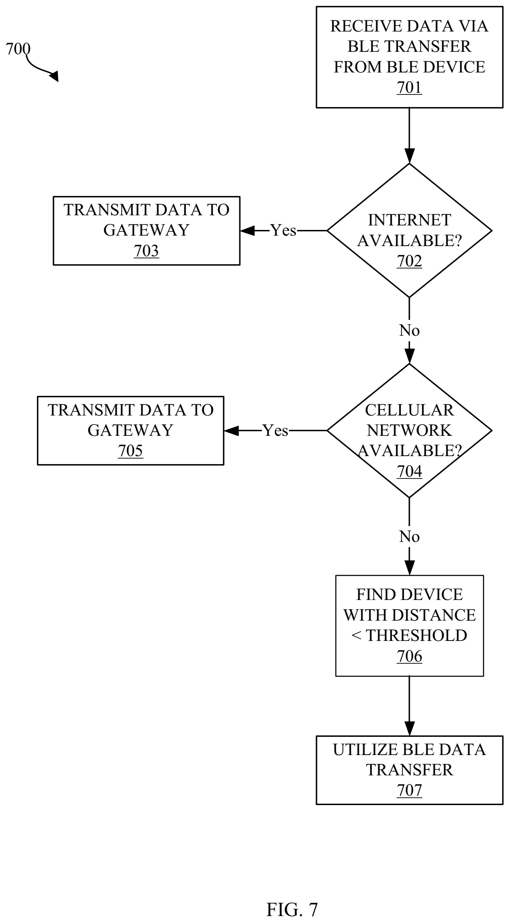

Fig. 7 is a flowchart diagram illustrating a method of transferring data in a wireless infrastructure. A ground BLE device 301 receives data via a BLE transfer from another BLE device (block 701). The data can be from a vehicle BLE device 101 or another ground BLE device 301. Once the data is transmitted, the ground BLE device 301 determines whether the internet is available (block 702). If the Internet is available to the ground BLE device 301, the ground BLE device 301 transmits the data to the gateway 350 via an Internet connection (block 703). If the Internet is not available to the ground BLE device 301, the ground BLE device 301 determines whether a cellular network is available (block 704). If the cellular network is available, the ground BLE device 301 transmits the data to the gateway 350 via the cellular network connection (block 705). If no cellular network is available, the ground BLE device 301 searches for another ground BLE device 301 (block 706). Once found, the data is transfer via BLE to the detected ground BLE device 301 (block 707).

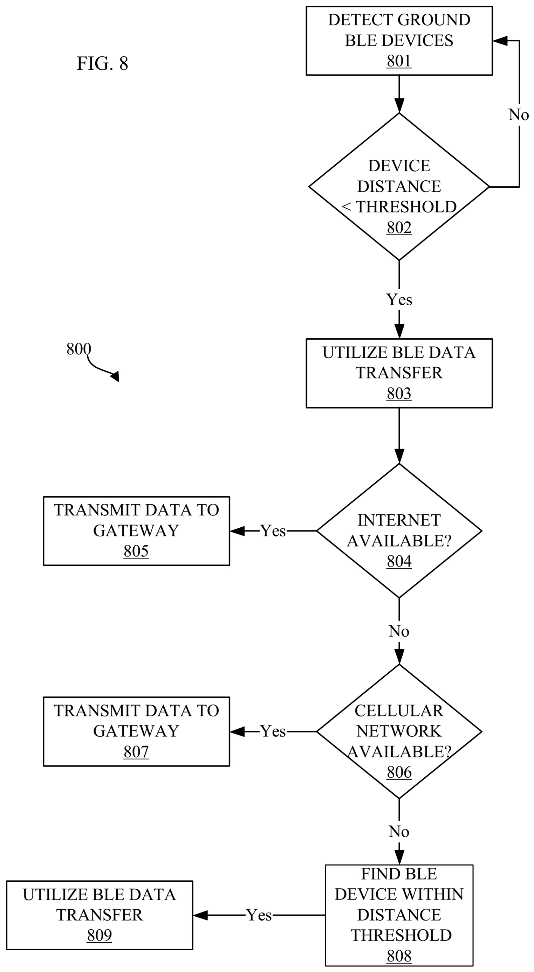

FIG. 8 illustrates a method 800 of transmitting data from a vehicle BLE device 101 with failed Internet connectivity. The vehicle BLE device 101 detects a ground BLE device 301 that is capable of BLE connectivity (block 801). The detection of the ground BLE device 301 may be triggered proactively or retroactively. For example, the vehicle BLE device 101 periodically searches for a ground BLE device 301 regardless of whether the vehicle BLE device 101 has an internet connection or not. In other examples, the vehicle BLE device 101 does not search for a ground BLE device 301 until it loses Internet connectivity.

After detecting the ground BLE device 301, the vehicle BLE device 101 determines that a distance is below a predetermined threshold (block 802). The vehicle BLE device 101 transmits the data via BLE to the ground BLE device 301 (block 803). The ground BLE device 301 determines whether it has an Internet connection (block 804). With an Internet connection, the ground BLE device 301 transmits the data to the gateway 350 (block 805). If the ground BLE device 301 has a failed internet connection, the ground BLE device 301 determines whether a cellular network is available (block 806). If the cellular network is available, the data is transmitted from the second BLE device 301 to the gateway 350 via the cellular network (block 807). If the cellular network is not available, the ground BLE device 301 searches to find a third BLE device 301 within a distance threshold from the second BLE device 301 (block 808). Once the third BLE device is found, the ground BLE device 301 utilizes BLE to transfer the data obtained from the vehicle BLE device to the third BLE device 301 (block 809).

In some examples, the ground BLE device 301 initial determines if an internet connection is available to transfer the data (e.g., block 804). If there is no internet connection, the method then checks for a cellular connection (e.g., block 806). In other examples, the sequence is reversed with the cellular network connection initially determined followed by an Internet connection if necessary.

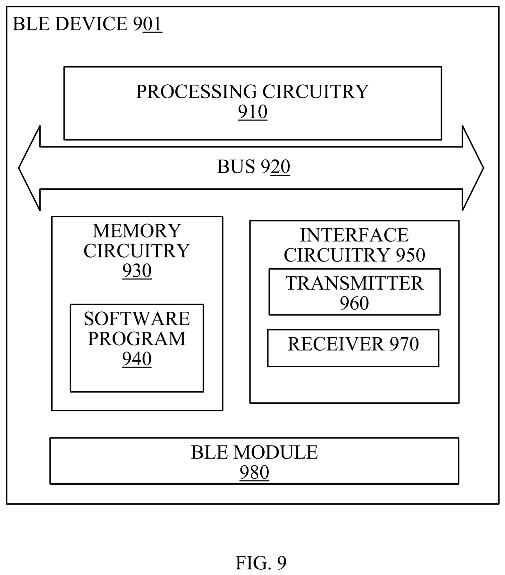

FIG. 9 is a schematic block diagram illustrating an exemplary BLE device 901. The vehicle BLE device 101 and the ground BLE devices 301 are examples of BLE devices 901. A BLE-enabled device 901 may be any electronic device that includes a BLE module 980. The BLE module 980 is a compact electronic device equipped with BLE technology allowing the transfer of data via a BLE signal. A BLE module 980 serves as an interface to other BLE devices, enabling BLE data transmission, collection, processing, and forwarding among BLE devices 901.

The BLE device 901 includes processing circuitry 910, memory circuitry 930, and interface circuitry 950. The processing circuitry 910 is communicatively coupled to the memory circuitry 930 and the interface circuitry 950, e.g., via one or more buses 920. The processing circuitry 910 includes one or more microprocessors, microcontrollers, hardware circuits, discrete logic circuits, hardware registers, digital signal processors (DSPs), field-programmable gate arrays (FPGAs), application-specific integrated circuits (ASICs), or a combination thereof. In one example, the processing circuitry 910 is programmable hardware capable of executing a software program 940 stored, e.g., as a machine-readable computer program 940 in the memory circuitry 930.

The memory circuitry 930 includes non-transitory machine-readable media, whether volatile or non-volatile, including but not limited to solid state media (e.g., SRAM, DRAM, DDRAM, ROM, PROM, EPROM, flash memory, solid-state drive, etc.), removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in various combination. The memory circuitry 930 may store one or more software programs 940.

In some examples, the interface circuitry 950 is a controller hub configured to control the input and output (I/O) data paths of the BLE device 901. Such I/O data paths may include data paths for exchanging signals over a communications network and data paths for exchanging signals with an electronic device or a user. For example, interface circuitry 950 includes a transceiver configured to send and receive communication signals over one or more of a wireless network, Ethernet network, or optical network. In some examples, the interface circuitry 950 includes (or is communicatively connected to) one or more of a graphics adapter, display port, video bus, touchscreen, graphical processing unit (GPU), display port, Liquid Crystal Display (LCD), and Light Emitting Diode (LED) display, for presenting visual information to a user. In some examples, the interface circuitry 950 includes one or more of a pointing device (e.g., a mouse, stylus, touchpad, trackball, pointing stick, joystick), touchscreen, microphone for speech input, optical sensor for optical recognition of gestures, and keyboard for text entry.

The interface circuitry 950 may be implemented as a unitary physical component or as a plurality of physical components that are contiguously or separately arranged, any of which may be communicatively coupled to any other or may communicate with any other via the processing circuitry 910. In one example, the interface circuitry 950 includes output circuitry (e.g., transmitter 960 configured to send communication signals over the communications network) and input circuitry (e.g., receiver 970 configured to receive communication signals over the communications network). Similarly, the output circuitry may include a display, whereas the input circuitry may include a keyboard, touch screen, or card reader. Other examples, permutations, and arrangements of the above and their equivalents will be readily apparent to those of ordinary skill.

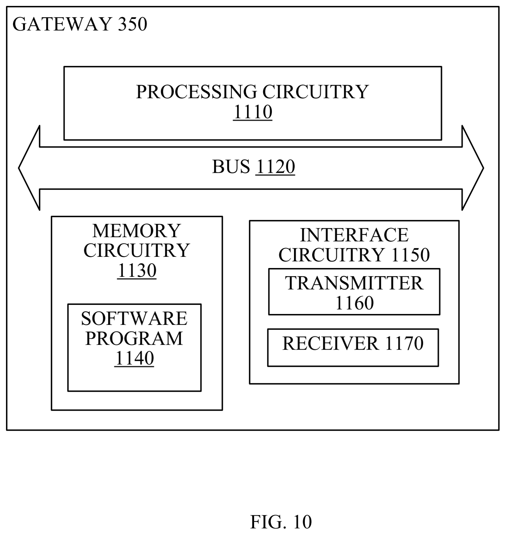

FIG. 10 is a schematic block diagram illustrating an exemplary gateway 350. The gateway 350 includes processing circuitry 1110, memory circuitry 1130, and interface circuitry 1150. The processing circuitry 1110 is communicatively coupled to the memory circuitry 1130 and the interface circuitry 1150, e.g., via one or more buses 1120. The processing circuitry 1110 includes one or more microprocessors, microcontrollers, hardware circuits, discrete logic circuits, hardware registers, digital signal processors (DSPs), field-programmable gate arrays (FPGAs), application-specific integrated circuits (ASICs), or a combination thereof. In one example, the processing circuitry 1110 is programmable hardware capable of executing a software program 1140 stored, e.g., as a machine-readable computer program 1140 in the memory circuitry 1130.

The memory circuitry 1130 includes non-transitory machine-readable media, whether volatile or non-volatile, including but not limited to solid state media (e.g., SRAM, DRAM, DDRAM, ROM, PROM, EPROM, flash memory, solid-state drive, etc.), removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in various combination. The memory circuitry 1130 may store one or more software programs 1140.

In some examples, the interface circuitry 1150 is a controller hub configured to control the input and output (I/O) data paths of the gateway 350. Such I/O data paths may include data paths for exchanging signals over a communications network and data paths for exchanging signals with an electronic device or a user. For example, interface circuitry 1150 includes a transceiver configured to send and receive communication signals over one or more of a wireless network, Ethernet network, or optical network. In some examples, the interface circuitry 1150 includes (or is communicatively connected to) one or more of a graphics adapter, display port, video bus, touchscreen, graphical processing unit (GPU), display port, Liquid Crystal Display (LCD), and Light Emitting Diode (LED) display, for presenting visual information to a user. In some examples, the interface circuitry 1150 includes one or more of a pointing device (e.g., a mouse, stylus, touchpad, trackball, pointing stick, joystick), touchscreen, microphone for speech input, optical sensor for optical recognition of gestures, and keyboard for text entry.

The interface circuitry 1150 may be implemented as a unitary physical component or as a plurality of physical components that are contiguously or separately arranged, any of which may be communicatively coupled to any other or may communicate with any other via the processing circuitry 1110. In one example, the interface circuitry 1150 includes output circuitry (e.g., transmitter 1160 configured to send communication signals over the communications network) and input circuitry (e.g., receiver 1170 configured to receive communication signals over the communications network and or a device sensor network). Similarly, the output circuitry may include a display, whereas the input circuitry may include a keyboard, touch screen, or card reader. Other examples, permutations, and arrangements of the above and their equivalents will be readily apparent to those of ordinary skill.

The vehicle BLE devices 101, the gateway 350 and existing systems 360 are connected such that data is uploaded or downloaded via Internet access (e.g., Wi-Fi, WLAN, etc.). The node-to-node network 310 may connect to one or more aircraft 100 at once or simultaneously. Each ground BLE device 301 may be connected to the same or different wireless network.

Figure 1 illustrates one example of an aircraft 100. Other examples of aircraft 100 include but are not limited to manned aircraft, unmanned aircraft, manned spacecraft, unmanned spacecraft, manned rotorcraft, unmanned rotorcraft, satellites, rockets, missiles, manned terrestrial vehicles, unmanned terrestrial vehicles, and combinations thereof. The systems and methods are also applicable in other contexts, with examples including but not limited to other vehicles such as ships, watercraft, trucks, and cars.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method of transmitting data from a first Bluetooth Low Energy, 'BLE', (101) device, the method comprising:
determining (501) that a first BLE device (101) has an Internet connection failure;
determining (502) that a second BLE device (301) is within proximity to the first BLE device; and
transmitting (503), from the first BLE device to the second BLE device, the data via BLE.

2. The method of claim 1, further comprising determining that the second BLE device is able to connect to the Internet prior to transmitting the data from the first BLE device to the second BLE device.

3. The method of claim 1 or 2, further comprising after receiving the data at the second BLE device, determining that the second BLE device has an Internet connection failure.

4. The method of claim 3, further comprising:
responsive to determining that an Internet connection is unavailable to the second BLE device, sending the data from the second BLE device to a third BLE device via a BLE signal with the third BLE device being within a threshold distance from the second BLE device; and
transmitting the data from the third BLE device to a gateway (350).

5. The method of claim 3 or 4, further comprising responsive to determining that the second BLE device has an Internet connection failure, determining that a cellular network is available to the second BLE device.

6. The method of any one of claims 1 to 5, further comprising:
transmitting, by the first BLE device, a request message to the second BLE device to request BLE communication with the second BLE device; and
receiving an acknowledgment from the second BLE device indicating that the second BLE device is capable of receiving a BLE signal from the first BLE device.

7. The method of claim 1, further comprising transmitting the data from the second BLE device to a gateway upon determining that there is no internet failure.

8. A method of transmitting data from a first Bluetooth Low Energy, 'BLE', (101) device that has an Internet failure, the method comprises:
detecting (401) a second BLE device (301) capable of BLE connectivity;
transmitting (403) data from the first BLE device via BLE to the second BLE device;
determining (404) that an Internet connection is available to the second BLE device; and
responsive (405) to determining that the Internet connection is available to the second BLE device, transmitting the data to a gateway (350) from the second BLE device.

9. The method of claim 8, wherein the first BLE device and the second BLE device are Internet of Things, 'IOT', devices.

10. The method of claim 8 or 9, wherein the second BLE device is part of a node-to-node network (310) connected via BLE signals.

11. The method of any one of claims 8 to 10, further comprising:
transmitting, by the first BLE device, a request message to the second BLE device to request BLE communication with the second BLE device;
receiving an acknowledgment from the second BLE device indicating that the second BLE device is capable of receiving a BLE signal from the first BLE device; and
responsive to receiving the acknowledgment, transmitting the data from the first BLE device to the second BLE device.

12. The method of any one of claims 8 to 11, wherein the first BLE device is located in a vehicle (100) and/or the second BLE device is a peripheral device located at an airport.

13. A method of transmitting data from a second Bluetooth Low Energy, 'BLE', (101) device, the method comprising:
receiving (601) a request message at the second BLE device (301) from a first BLE device requesting BLE communication;
transmitting (602) an acknowledgment from the second BLE device to the first BLE device indicating that the second BLE device is capable of receiving a BLE signal from the first BLE device;
responsive (603) to a distance between the second BLE device and the first BLE device being below a predetermined threshold, receiving data via BLE from the first BLE device;
determining (604) that an Internet connection is available for the second BLE device; and
responsive (605) to determining that the Internet connection is available, transmitting the data to a gateway (350) from the second BLE device.

14. The method of claim 13, further comprising determining that the Internet connection is available at the second BLE device prior to receiving the data via BLE from the first BLE device.

15. The method of claim 13 or 14, further comprising:
responsive to a cellular network not being available to the second BLE device, detecting a distance between a third BLE device (301) and the second BLE device;
determining that the distance is below a threshold and transmitting the data from the second BLE device to the third BLE device; and
transmitting the data to the gateway from the third BLE device.
